# EUROPÄISCHE PATENTSCHRIFT

(11) **EP 0 932 820 B1**
(45) Veröffentlichungstag und Bekanntmachung des Hinweises auf die Patenterteilung: **24.02.2016**
(21) Anmeldenummer: 98934742.2
(22) Anmeldetag: 16.05.1998
(51) Int. Cl.: G01F 1/684, G01F 15/12, G01F 5/00

(54) **KOMBINATION EINER LEITUNG MIT EINER MESSVORRICHTUNG ZUM MESSEN DER MASSE EINES IN DER LEITUNG STRÖMENDEN MEDIUMS**
COMBINATION OF A CONDUIT AND A DEVICE FOR MEASURING THE VOLUME OF A MEDIUM FLOWING IN SAID CONDUIT
ENSEMBLE D' UNE CONDUITE ET D'UN DISPOSITIF POUR MESURER LA MASSE D'UN MILIEU S'ECOULANT DANS LA CONDUITE

(30) Priorität: 19.08.1997 DE 19735891
(43) Veröffentlichungstag der Anmeldung: 04.08.1999
(73) Patentinhaber: ROBERT BOSCH GMBH, 70442 Stuttgart (DE)
(72) Erfinder: MÜLLER, Wolfgang, D-71277 Rutesheim (DE); KONZELMANN, Uwe, D-71679 Asperg (DE)
(86) Internationale Anmeldenummer: PCT/DE1998/001364
(87) Internationale Veröffentlichungsnummer: WO 1999/009378

(56) Entgegenhaltungen:
- DE-A- 3 636 930
- DE-A- 4 407 209
- DE-A- 19 547 915
- GB-A- 2 293 884
- US-A- 4 981 035

## Beschreibung

### Stand der Technik

Die Erfindung geht aus von einer Kombination einer Leitung mit einer Meßvorrichtung zum Messen der Masse eines in der Leitung strömenden Mediums nach der Gattung des Hauptanspruchs. Es ist bereits aus der DE 44 07 209 C2 eine Meßvorrichtung bekannt, bei welcher ein Meßkanal und ein Umlenkkanal in einem Meßmodul integriert sind. Der Meßkanal nimmt das Meßelement auf und verjüngt sich ausgehend von einer Einlaßöffnung in Strömungsrichtung zunehmend. An den Meßkanal schließt sich der S-förmig ausgebildete Umlenkkanal an, der ein rechteckförmiges Querschnittsprofil hat. Das Meßmodul ist als steckbares Bauteil ausgebildet. Ein Trägerteil des Meßmoduls ist in die Wandung der zu messenden Leitung dichtend einsetzbar und nimmt eine elektronische Auswerteschaltung auf.

Als Meßelement eignet sich insbesondere ein mikromechanisches Bauelement, wie es z. B. aus der DE 43 38 891 A1 bekannt ist. Bei dem aus der DE 43 38 891 A1 bekannten Meßelement sind zwei temperaturempfindliche Widerstände auf getrennten Membranen integriert, die z. B. aus Siliziumoxid oder Siliziumnitrid bestehen kann und eine geringe Wärmeleitfähigkeit und eine geringe spezifische Wärmekapazität aufweist. Die beiden temperaturempfindlichen Widerstände sind durch einen Siliziumrahmen voneinander thermisch isoliert. Während einer der temperaturabhängigen Widerstände als eigentlicher Meßsensor arbeitet, dient der zweite temperaturempfindliche Widerstand als Sensor für die Temperatur des strömenden Mediums.

Aus der DE 36 27 465 C2 ist es als solches bekannt, ein Meßelement zum Messen der Luftmenge in einem Ansaugkanal gegenüber der Strömungsrichtung um einen vorgegebenen Winkel zu neigen, um das Anhaften von suspendierten Teilchen an dem Meßelement zu verringern. Ferner ist aus dieser Druckschrift bekannt, die dem Luftstrom zugewandten und abgewandten Stirnflächen des Meßelements mit keilförmigen Vorsprüngen zu versehen, ebenfalls um das Anhaften von suspendierten Teilchen des Luftstroms zu vermindern. Die Ausbildung der keilförmigen Vorsprünge wird durch anisotropes Ätzen eines Siliziumsubstrats erzielt. Aus der DE 39 41 330 C2 ist es bekannt, die Oberfläche eines temperaturempfindlichen Meßelements um einen vorgegebenen Winkel gegenüber der Strömungsrichtung des zu messenden Mediums zu neigen. Da die Winkelabhängigkeit der Meßcharakteristik relativ groß ist, wenn das Meßelement nur geringfügig gegenüber der Strömungsrichtung geneigt ist oder im Extremfall parallel zur Strömungsrichtung ausgerichtet ist, jedoch die Winkelabhängigkeit der Meßcharakteristik bei größeren Neigungswinkeln zwischen der Meßoberfläche des Meßelements und der Strömungsrichtung des Mediums geringer ist, ergibt sich nach der Lehre dieser Druckschrift ein relativ zuverlässiges und reproduzierbares Meßergebnis, wenn der Winkel zwischen der Strömungsrichtung des Mediums und der Meßoberfläche des Meßelements in einem Bereich zwischen 20° und 60° liegt.

Die bekannten Meßvorrichtungen haben jedoch den Nachteil, daß das Meßelement durch in dem strömenden Medium transportierte Schmutzpartikel, insbesondere Staubkörnchen, zerstört werden kann, wenn die Schmutzpartikel mit dem Meßelement kollidieren. Insbesondere wenn mikromechanische Bauteile, wie sie beispielsweise in der DE 43 38 891 A1 beschrieben sind, als Meßelemente Verwendung finden, können die Schmutzpartikel auf der relativ dünn ausgebildeten Membran auftreffen und diese nachhaltig schädigen. Daher kann es zu einem erhöhten Verschleiß des Meßelements und zu einem vorzeitigen Ausfall kommen. Ferner können sich öl- oder fetthaltige Schmutzpartikel auf dem Meßelement insbesondere auf dessen Membran niederschlagen, die als Haftvermittler für Festkörperpartikel, z. B. Staub oder Sandkörner, dienen und das Meßelement nachhaltig verschmutzen. Durch die Verschmutzung ist die Wärmekopplung zwischen dem Meßelement und dem strömenden Medium gestört, so daß sich eine Verschiebung der Meßkennlinie gibt, was zwangsläufig zu Meßfehlern führt. Bei Verwendung der Meßvorrichtung zum Erfassen der Ansaugluft in dem Ansaugkanal einer Brennkraftmaschine kann es dabei z. B. zu einer fehlerhaften Ansteuerung der Brennstoffeinspritzventile und somit zu einer nicht optimalen Einstellung des Brennstoff-Luftgemisches kommen, so daß sich die Abgaswerte der Brennkraftmaschine mit zunehmender Verschmutzung des Meßelements verschlechtern.

Ein weiterer Nachteil bei der bekannten Meßvorrichtung besteht darin, daß die Meßgenauigkeit bei pulsierenden Strömungen in der zu messenden Leitung noch nicht optimal ist.

### Vorteile der Erfindung

Die erfindungsgemäße Kombination einer Leitung mit einer Meßvorrichtung zum Messen der Masse eines in der Leitung strömenden Mediums mit den kennzeichnenden Merkmalen des Anspruchs 1 hat demgegenüber den Vorteil, daß eine Beaufschlagung des Meßelements mit in dem strömenden Medium mitgeführten Schmutzpartikeln weitestgehend vermieden, zumindest aber verringert wird. Insbesondere die Membran eines als mikromechanisches Bauteil ausgebildeten Meßelements wird durch die erfindungsgemäße Maßnahme vor der Kollision mit in dem strömenden Medium mitgeführten Schmutzpartikeln weitestgehend geschützt, so daß die Lebensdauer des Meßelements wesentlich verlängert werden kann. Durch die Neigung der Meßkanal-Längsachse gegenüber der Leitungs-Längsachse entsteht in dem Meßkanal ein bezüglich der Flugbahnen von in dem strömenden Medium mitgeführten Partikeln abgeschatteter Bereich, in welchen die Schmutzpartikel nicht oder in wesentlich verringerter Anzahl eintreten. Durch die Anordnung des Meßelements in diesem Bereich wird die Gefahr der Kollision des Meßelements, insbesondere der dünnen und empfindlichen Membran des Meßelements mit den Schmutzpartikeln erheblich verringert. Da ferner das Auftreffen von öl- oder fetthaltigen Schmutzpartikeln auf dem Meßelement verringert wird, wird einer Verschmutzung durch Anhaften von Staub oder anderen Festkörperpartikeln auf dem Meßelement, insbesondere auf der Oberfläche der Membran eines als mikromechanisches Bauteil ausgebildeten Meßelements, weitgehend verhindert. Auf diese Weise wird einer Veränderung der Kennlinie entgegengewirkt und die Zuverlässigkeit des erzielten Meßergebnisses erhöht. Bei Verwendung der erfindungsgemäßen Meßvorrichtung zum Erfassen der Ansaugluftmasse einer Brennkraftmaschine können daher die Abgaswerte der Brennkraftmaschine verbessert werden.

Durch die in den Unteransprüchen aufgeführten Maßnahmen sind vorteilhafte Weiterbildungen und Verbesserungen der in dem Hauptanspruch angegebenen Meßvorrichtung möglich.

Insbesondere ist es vorteilhaft, wenn auch die von der Auslaßöffnung aufgespannte Austrittsebene der Meßvorrichtung gegenüber der Leitungs-Längsachse um einen vorgegebenen Winkel geneigt ist. Durch diese Maßnahme wird die Dynamik bei einer pulsierenden Strömung des zu messenden Mediums wesentlich verbessert und es ergibt sich eine verbesserte Strömung des Mediums durch den Meßkanal und dem Umlenkkanal der Meßvorrichtung.

Das Meßelement kann in vorteilhafter Weise an einer in den Meßkanal ragenden Platte befestigt sein, deren stromaufwärtige Stirnseite durch eine oder mehrere Schrägflächen abgeschrägt ist. Durch diese Maßnahme wird das Anhaften von Schmutzpartikeln an der stromaufwärtigen Stirnseite der Platte verringert. Dabei ist die Meßplatte gegenüber der Hauptströmungsrichtung in dem Meßkanal vorzugsweise so ausgerichtet, daß das Medium auf der stromaufwärtigen Stirnseite mit einer Querströmungskomponente auftrifft, die in der Ebene der schneidenartigen Schrägfläche liegt. Durch diese Strömungskomponente werden an der Schrägfläche anhaftende Schmutzpartikel mit einer Kraftkomponente entlang der Schrägfläche beaufschlagt und somit von dem empfindlichen Bereich des Meßelements beseitigt. Durch diesen Selbstreinigungseffekt kann die Kennlinienstabilität des Meßelements zusätzlich verbessert werden.

In ähnlicher Weise sind die Stirnflächen der Begrenzungswandungen des Meßkanals an der Einlaßöffnung gegenüber der Hauptströmungsrichtung vorzugsweise so ausgerichtet, daß das Medium auf die Stirnflächen der Begrenzungswandungen des Meßkanals mit einer Querströmungskomponente auftrifft, die in der Ebene dieser Stirnflächen liegt. Auf diese Weise entsteht ebenfalls eine Kraftkomponente, die an den Stirnflächen anhaftende Schmutzpartikel beaufschlagt und somit selbstreinigend beseitigt.

### Zeichnung

Ausführungsbeispiele der Erfindung sind in der Zeichnung vereinfacht dargestellt und in der nachfolgenden Beschreibung näher erläutert. Es zeigen
- Fig. 1: in teilweiser Schnittdarstellung eine Seitenansicht der erfindungsgemäßen Meßvorrichtung entsprechend einem ersten Ausführungsbeispiel,
- Fig. 2: in teilweiser Schnittdarstellung eine Seitenansicht einer erfindungsgemäßen Meßvorrichtung entsprechend einem zweiten Ausführungsbeispiel und
- Fig. 3: eine schematische Darstellung der Strömungsverhältnisse an der stromaufwärtigen Stirnseite einer Platte, an welcher das Meßelement befestigt ist.

### Beschreibung der Ausführungsbeispiele

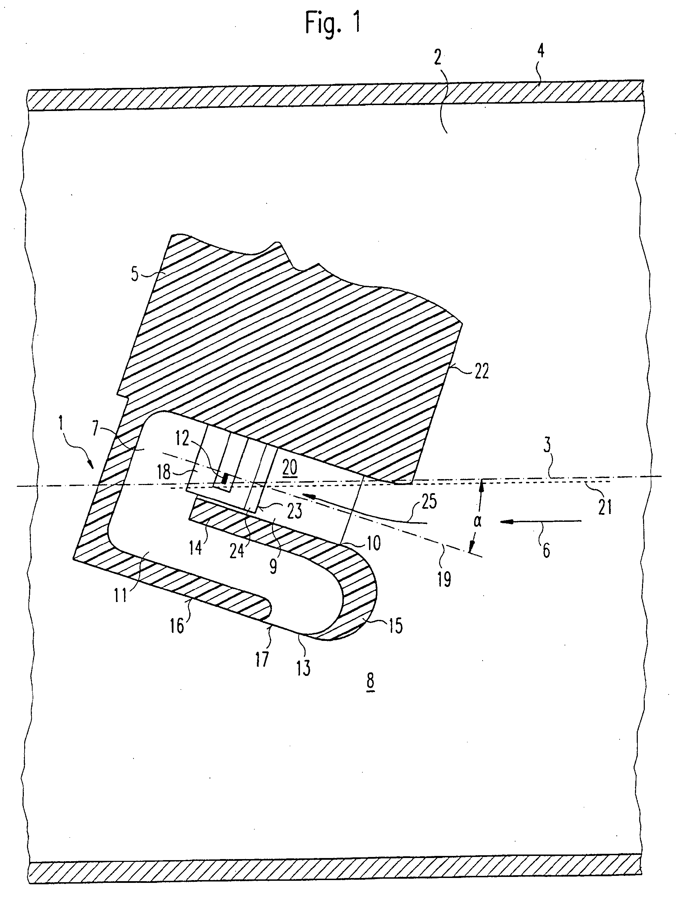

Die Fig. 1 zeigt in teilweiser Schnittdarstellung eine Seitenansicht einer erfindungsgemäßen Meßvorrichtung 1, die zur Messung der Masse eines strömenden Mediums, insbesondere der Ansaugluftmasse von Brennkraftmaschinen, dient.

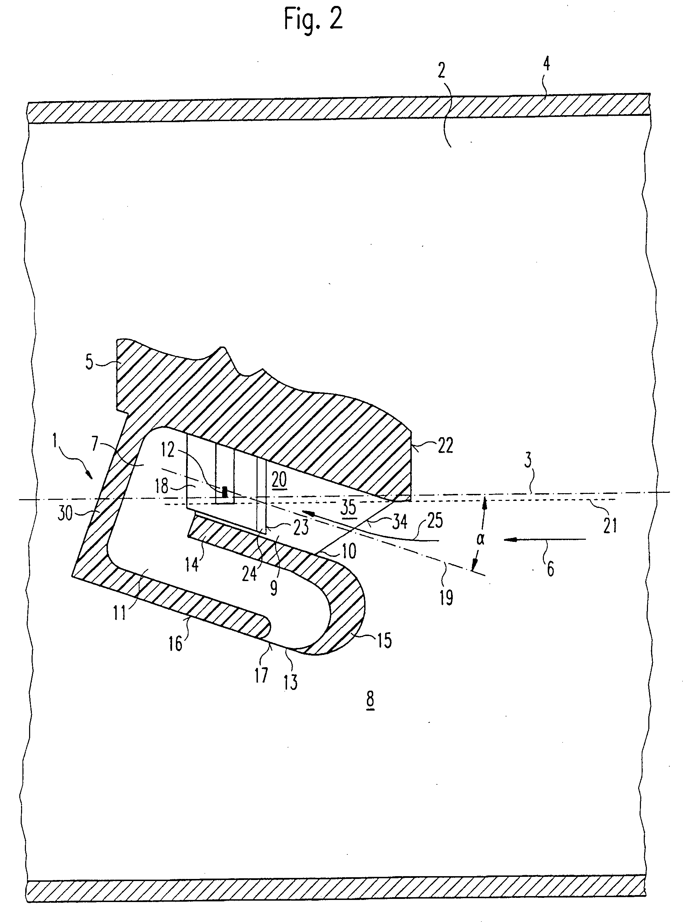

Die Meßvorrichtung 1 erfaßt die Masse eines in einer Leitung 2 strömenden Mediums. Die Leitung 2 ist lediglich schematisch dargestellt und erstreckt sich zumindest im Bereich der Meßvorrichtung 1 entlang einer Leitungs-Längsachse 3. Die Leitung 2 kann z. B. eine Ansaugleitung einer Brennkraftmaschine sein, über die die Brennkraftmaschine Luft aus der Umgebung ansaugen kann. In den Ausführungsbeispielen der Figuren 1 und 2 strömt das Medium, z. B. die Ansaugluft, von rechts nach links durch die Leitung 2. Die Strömungsrichtung in der Leitung 2 ist durch einen Pfeil 6 gekennzeichnet.

Die Meßvorrichtung 1 hat vorzugsweise eine schlanke, sich radial in der Leitung 2 erstreckende, quaderförmige Gestalt und kann vorzugsweise in eine aus der Wandung 4 der Leitung 2 ausgenommene, in den Figuren nicht dargestellte Öffnung der Leitung 2, z. B. steckbar eingeführt werden. Ein Befestigungsarm 5 der Meßvorrichtung dient der Befestigung der Meßvorrichtung 1 an der Wandung 4 der Leitung 2. Der Befestigungsarm 5 kann dabei eine in den Figuren nicht dargestellte, kragenförmige Erweiterung aufweisen, die gegenüber der Wandung 4 der Leitung 2 abgedichtet ist. Die Ausbildung der Meßvorrichtung 1 als in die Wandung 4 der Leitung 2 einsteckbares Steckmodul gestattet eine besonders einfache Montage und Wartung. In den Befestigungsarm 5 kann entsprechend einer bevorzugten Ausgestaltung eine elektronische Auswerteschaltung integriert sein und an einem aus der Wandung 4 der Leitung 2 herausragenden Abschnitt des Haltearms 5 können entsprechende Anschlüsse für die Stromversorgung der Meßvorrichtung 1 und zum Abgreifen des von der Meßvorrichtung 1 gewonnen Meßsignals vorgesehen sein.

Die Meßvorrichtung 1 kann z. B. einstückig aus Kunststoff als Kunststoff-Spritzgußteil hergestellt sein. Die Meßvorrichtung 1 weist einen Strömungskanal 7 auf, der in Art einer Bypass-Leitung parallel zu dem Hauptströmungsquerschnitt 8 der Leitung 2 angeordnet ist. Der Strömungskanal 7 der Meßvorrichtung 1 gliedert sich in einen Meßkanal 9, der sich von einer Einlaßöffnung 10 bis zu einem sich in Strömungsrichtung an den Meßkanal 9 anschließend, S-förmig ausgebildeten Umlenkkanal 11 erstreckt. Der Meßkanal 9 nimmt ein Meßelement 12 auf und verjüngt sich in Strömungsrichtung ausgehend von der Einlaßöffnung 10 in Richtung auf den Umlenkkanal 11 zunehmend. Der Umlenkkanal 11 weist hingegen einen im wesentlichen gleichförmigen, rechteckförmigen Strömungsquerschnitt auf und führt das durch den Strömungskanal 7 der Meßvorrichtung 1 strömende Medium zu einer Auslaßöffnung 13. Eine Trennwand 14 trennt den Meßkanal 9 von dem Umlenkkanal 11. An die Trennwand 14 schließt sich ein im Querschnitt abgerundeter Körper 15 an, der dem anströmenden Medium einen nur geringen Strömungswiderstand entgegenstellt. Die Auslaßöffnung 13 befindet sich an einer Oberfläche 16 der Meßvorrichtung 1, die der innenseitigen Oberfläche der Wandung 4 der Leitung 2 gegenüberliegt.

Das Meßelement 12 ist vorzugsweise als mikromechanisches Bauteil ausgebildet, wie dies beispielsweise in der DE 43 38 891 A1 vorgeschlagen wird. Das Meßelement weist in an sich bekannter Weise zumindest eines vorzugsweise aber zwei temperaturempfindliche Widerstandselemente auf, die auf einer dielektrischen Membran, z. B. aus Siliziumoxid oder Siliziumnitrid ausgebildet sind. Die Widerstandselemente sind voneinander z. B. durch einen Siliziumrahmen getrennt. Die dielektrische Membran hat dabei den Vorteil einer nur geringen Wärmekapazität und einer relativ geringen thermischen Leitfähigkeit, so daß das Ansprechverhalten des Meßelements relativ kurz ist.

Das Meßelement 12 besitzt in den in Fig. 1 und 2 dargestellten, bevorzugten Ausführungsbeispielen einen plattenförmigen Trägerkörper auf Siliziumbasis, mit einem durch Ausätzen entstandenen membranförmigen Sensorbereich mit einer äußerst geringen Dicke und mehrere, ebenfalls durch Ausätzen entstandene Widerstandsschichten. Diese Widerstandsschichten bilden wenigstens einen temperaturabhängigen Meßwiderstand und beispielsweise einen Heizwiderstand. Vorzugsweise befindet sich in der Mitte der Membran der Heizwiderstand, der mit Hilfe eines Temperaturfühlers auf eine Übertemperatur geregelt wird. Stromauf und stromab des vom Heizwiderstand gebildeten Heizbereichs befinden sich zwei, zum Heizbereich symmetrisch angeordnete Meßwiderstände. Der Trägerkörper des Meßelements 12 ist in eine Aussparung einer zum Beispiel aus Metall bestehenden Aufnahme bündig in dieser untergebracht und zum Beispiel durch Klebung gehalten. Diese Aufnahme wird im folgenden als Platte 18 bezeichnet. Die Platte 18 ragt in den Meßkanal 9 hinein, so daß das Meßelement 12 von dem durch den Strömungskanal 7 der Meßvorrichtung 1 strömenden Medium umströmt wird.

Erfindungsgemäß ist eine mittig durch den Meßkanal 9 verlaufende Meßkanal-Längsachse 19 gegenüber der Leitungs-Längsachse 3 um einen vorgegebenen Winkel α geneigt. Der Meßkanal 9 weist durch diese Maßnahme einen abgeschatteten Bereich 20 auf, der sich außerhalb der entlang der Leitungs-Längsachse 3 parallelen Projektion der Einlaßöffnung 10 des Meßkanals 9 befindet. In Fig. 1 und 2 befindet sich der abgeschattete Bereich oberhalb der unterbrochenen Linie 21. Die unterbrochene Linie 21 symbolisiert eine Flugbahn eines Schmutzpartikels mit relativ großer Masse, der in dem durch die Leitung 2 strömenden Medium mitgeführt wird. Derartige Partikel können dem Meßelement 12, insbesondere dessen Membran bei Ausbildung des Meßelement 12 als mikromechanisches Bauteil, erheblich schaden. Durch die erfindungsgemäße Ausbildung wird jedoch eine Kollision eines schädigenden Schmutzpartikels mit dem Meßelement 12 wirkungsvoll verhindert. Die zu einer Schädigung des Meßelements 12 führenden Schmutzpartikel werden im Eingangsbereich des Meßkanals 9 aufgrund ihrer relativ hohen trägen Masse nur unwesentlich in Richtung auf die Meßkanal-Längsachse 19 umgelenkt. Die Flugbahn 21 der schädigenden Schmutzpartikel verläuft daher wesentlich geradlinig. Schmutzpartikel, deren Flugbahn oberhalb der unterbrochenen Linie 21 in Fig. 1 und 2 verläuft, treten nicht in die Einlaßöffnung 10 des Meßkanals 1 ein, sondern treffen auf der Oberfläche 22 der Meßvorrichtung 1 auf. In dem abgeschatteten Bereich 20 des Meßkanals 9 der sich in den Figuren 1 und 2 oberhalb der unterbrochenen Linie 21 befindet, befinden sich daher nahezu keine schädigenden Schmutzpartikel. Erfindungsgemäß wird weiter vorgeschlagen, das Meßelement 12 in diesem abgeschatteten Bereich 20 anzuordnen. Vorzugsweise ist das Meßelement 12 in der Nähe der Mitte des Meßkanals 9 anzuordnen, wo die größte Strömungsgeschwindigkeit herrscht und daher die größte Meßempfindlichkeit zu erzielen ist.

Entsprechend einer bevorzugten Ausführungsform, weist die Platte 18 an ihrer stromaufwärtigen Stirnseite 23 zumindest eine schneidenartig abgeschrägte Schrägfläche 24 auf. Vorzugsweise ist eine derartige Schrägfläche 24 auch auf der gegenüberliegenden Seite der stromaufwärtigen Stirnseite 23 ausgebildet, so daß die Platte 18 sich an der Stirnseite 23 entgegen der Hauptströmungsrichtung in Art einer Messerschneide verjüngt. Die Hauptströmungsrichtung des Meßkanals 9 ist in Fig. 1 und 2 durch den Pfeil 25 veranschaulicht. Die schneidenartige Abschrägung hat den Vorteil, daß sich an den verschmutzungsempfindlichen Vorderkanten der Platte 18 kein Strömungsstaupunkt bildet, an dem das abströmende Medium abgebremst wird und Schmutzpartikel an der Stirnseite 23 der Platte 18 ablagern kann. Grundsätzlich ist es auch möglich, die Platte 18 und das Meßelement 12 einstückig auszubilden, insbesondere wenn das Meßelement 12 als mikromechanisches Bauteil auf einem Siliziumsubstrat gefertigt ist. Die Schrägfläche 24 bzw. die beidseitig vorgesehenen Schrägflächen können dabei z. B. durch anisotropes Ätzen des Siliziumsubstrats in einfacher Weise realisiert werden.

Bei den in den Fig. 1 und 2 dargestellten Ausführungsbeispielen sind der Meßkanal 9, die Platte 18 mitsamt dem Meßelement 12 und der Umlenkkanal 11 als integrales Meßmodul ausgebildet. In den dargestellten Ausführungsbeispielen ist daher nicht nur die Meßkanal-Längsachse 19 um den vorgegebenen Winkel α gegenüber der Leitungs-Längsachse 3 geneigt, sondern das gesamte Meßmodul einschließlich des Umlenkkanals 11. Es kann daher ein konventionelles und in der Serienfertigung herstellbares Meßmodul zum Einsatz kommen, wobei lediglich der Neigungswinkel α so einzustellen ist, daß das Meßelement 12 in dem abgeschatteten Bereich 20 des Meßkanals 9 liegt. Durch die Neigung des gesamten Meßmoduls gegenüber der Leitungs-Längsachse 3 wird gleichzeitig auch die durch die Auslaßöffnung 13 aufgespannte Austrittsebene 17 gegenüber der Leitungs-Längsachse 3 geneigt. Die Auslaßöffnung 13 befindet sich daher im Lee der in der Leitung 2 herrschenden Strömung des Mediums, d. h. auf der der Anströmung des Mediums abgewandten Seite. Dies hat zusätzliche Vorteile, da sich eine wesentlich gleichmäßigere Strömung durch den Strömungskanal 7 der Meßvorrichtung 1 ergibt und insbesondere eine größere Dynamik bei einer pulsierenden Strömung des Mediums in der Leitung 2 erzielt wird. Sofern in der Leitung 2 eine Rückströmung entgegen der durch den Pfeil 6 angedeuteten Strömungsrichtung auftritt, befindet sich die Auslaßöffnung 13 auf der der Rückströmung zugewandten Seite und kann als Einlaßöffnung für die Rückströmung dienen, so daß durch die Meßvorrichtung 1 auch eine derartige Rückströmung grundsätzlich erfaßt werden kann.

Fig. 2 zeigt ein gegenüber dem in Fig. 1 dargestellten Ausführungsbeispiel geringfügig variiertes zweites Ausführungsbeispiel. Bereits beschriebene Elemente sind mit übereinstimmenden Bezugszeichen bezeichnet, so daß insoweit auf eine wiederholende Beschreibung verzichtet werden kann.

Ein Unterschied des in Fig. 2 dargestellten Ausführungsbeispiels gegenüber dem in Fig. 1 dargestellten Ausführungsbeispiel besteht zunächst darin, daß der Befestigungsarm 5 in der Leitung 2 radial ohne axiale Richtungskomponente geführt ist und daher die Wandung 30 des Strömungskanals 7 gegenüber dem Befestigungsarm 5 abgewinkelt ist.

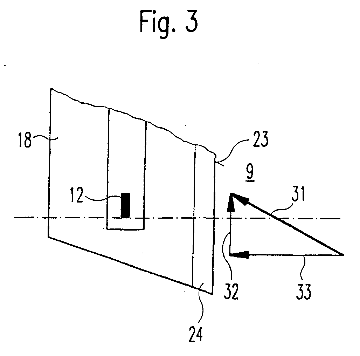

Ein weiterer Unterschied besteht darin, daß die stromaufwärtige Stirnseite 23 der Platte 18 gegenüber der durch den Pfeil 25 veranschaulichten Hauptströmungsrichtung des Mediums in dem Meßkanal 9 so ausgerichtet ist, daß das Medium auf der stromaufwärtigen Stirnseite 23 mit einer Querströmungskomponente auftrifft, die in der Ebene der Schrägfläche 24 liegt. Zur besseren Veranschaulichung der Strömungsverhältnisse an der Stirnseite 23 der Platte 18 ist in Fig. 3 die Platte 18 mit dem Meßelement 12 vergrößert dargestellt. Eingezeichnet ist ferner die Hauptströmungsrichtung des Mediums in dem Meßkanal 9. Die Hauptströmungsrichtung im Anströmbereich der Stirnseite 23 der Platte 18 erfolgt im wesentlichen parallel zu der Meßkanal-Längsachse 19. Die Hauptströmungsrichtung ist in Fig. 3 durch den Pfeil 31 veranschaulicht. Beim Auftreffen auf der Stirnseite 23 der Platte 18 wird die Hauptströmung in zwei in Fig. 3 durch die Pfeile 32 und 33 dargestellten Strömungskomponenten vektoriell aufgeteilt. Der Pfeil 32 veranschaulicht dabei eine Querströmungskomponente, die in der Ebene der Schrägfläche 24 liegt. Diese Querströmungskomponente übt auf an der Schrägfläche 24 anhaftenden Schmutzpartikel eine in Fig. 3 nach oben gerichtete Kraftkomponente aus, die den Schmutzpartikel entlang der Schrägfläche 25 quer zur Hauptströmungsrichtung 31 bewegt. Dadurch entsteht ein Selbstreinigungseffekt der schneidenartigen Schrägfläche 24, da auf der Schrägfläche 24 anhaftende Schmutzpartikel durch die Querströmungskomponente entweder gelöst und beseitigt, oder aber in den seitlichen Endbereich der schneidenartigen Schrägfläche 24 geschoben werden, wo sie auf die Kennlinie des Meßelements 12 keinen wesentlichen Einfluß hat. Eine Verschiebung der Kennlinie des Meßelements 12 durch an der Platte 12 anhaftende Schmutzpartikel wird durch diese Maßnahme daher weiter verringert und die Zuverlässig und Meßgenauigkeit der erfindungsgemäßen Meßvorrichtung 1 weiter erhöht.

Bei dem in Fig. 2 dargestellten Ausführungsbeispiel ist die Platte 18 in dem Meßkanal 9 so ausgerichtet, daß der Neigungswinkel der Platte 18 in dem Meßkanal 9 dem Neigungswinkel α entspricht, den die Kanal-Längsachse 19 gegenüber der Leitungs-Längsachse 3 entnimmt. Die Platte 18 ist daher zumindest mit ihrer stromaufwärtig gelegenen Stirnseite 23 bezüglich der Leitungs-Längsachse 3 radial bzw. senkrecht zu dieser positioniert. Dies ist jedoch nicht zwangsläufig erforderlich. Die Platte 18 kann vielmehr auch in dem Meßkanal 9 um einen von dem Winkel α abweichenden Winkel geneigt sein, wobei der optimale Neigungswinkel der Platte 18 in den Meßkanal 9 in Abhängigkeit von der Strömungsgeschwindigkeit des Mediums, dem Öffnungsquerschnitt des Meßkanals 9 und weiteren Parametern zu optimieren ist.

An der Einlaßöffnung 10 ist eine ähnliche Maßnahme vorgesehen, um auch dort das Anhaften von Schmutzpartikeln weitestgehend zu vermeiden. Der Meßkanal 9 weist zwei senkrecht zu der Zeichenebene der Fig. 2 zueinander versetzte Begrenzungswandungen auf. In Fig. 2 ist lediglich die hintere Begrenzungswandung 35 zu erkennen. Die Begrenzungswandung 35 hat an der Einlaßöffnung 10 eine Stirnfläche 34. Eine entsprechende Stirnfläche ist an der zweiten senkrecht zur Zeichenebene versetzten Begrenzungswandung des Meßkanals 9 an der Einlaßöffnung 10 ausgebildet. Bei dem in Fig. 2 dargestellten Ausführungsbeispiel sind die Stirnflächen 34 der Begrenzungswandungen 35 nicht senkrecht zu der durch den Pfeil 25 veranschaulichten Hauptströmungsrichtung des Meßkanals 9 ausgerichtet. Die Stirnflächen 34 sind vielmehr so geneigt, daß das Medium auf die Stirnflächen 34 der Begrenzungswandungen 35 des Meßkanals 9 mit einer Querströmungskomponente auftrifft, die in der Ebene der Stirnflächen 34 liegt. Dadurch wird der bereits bezüglich der Platte 18 beschriebene Selbstreinigungseffekt erzielt und Schmutzpartikel, die an den Stirnflächen 34 anhaften, werden gelöst und beseitigt oder zumindest entlang der Stirnflächen 34 bis zu einem der Enden der Stirnflächen 34 verschoben.

Die Erfindung ist nicht auf die dargestellten Ausführungsbeispiele beschränkt. Der Meßkanal 9 und der Umlenkkanal 7 können auch in anderer Weise ausgebildet sein, wenn dies für den entsprechenden Anwendungsfall zweckdienlich ist. Die erfindungsgemäße Meßvorrichtung 1 eignet sich sowohl zur Messung der Masse von gasförmigen als auch flüssigen strömenden Medien.

## Patentansprüche

1. Kombination einer Leitung (2) mit einer Messvorrichtung (1) zum Messen der Masse eines in der Leitung (2) entlang einer Leitungs-Längsachse (3) strömenden Mediums, insbesondere der Ansaugluftmasse einer Brennkraftmaschine, mit einem vom strömenden Medium umströmten Messelement (12), das in einem in der Leitung (2) vorgesehenen Messkanal (9) angeordnet ist, der sich entlang einer Messkanal-Längsachse (19) von einer Einlassöffnung (10) zu einem Umlenkkanal (11) erstreckt, der zu einer in der Leitung (2) mündenden Auslassöffnung (13) führt, wobei
die Messkanal-Längsachse (19) um einen vorgegebenen Winkel (α) gegenüber der Leitungs-Längsachse (3) geneigt ist und der Messkanal (9) einen abgeschatteten Bereich (20) aufweist, der sich außerhalb der entlang der Leitungs-Längsachse (3) parallelen Projektion der Einlassöffnung (10) befindet, und wobei das Messelement (12) in dem abgeschatteten Bereich (20) des Messkanals (9) angeordnet ist
**dadurch gekennzeichnet, dass** die Messkanal-Längsachse (19) gegenüber der Leitungs-Längsachse derart geneigt ist, dass von dem strömenden Medium mitgeführte Schmutzpartikel, deren Flugbahn entlang einer zur LeitungsLängsachse (3) parallelen und die Einlassöffnung (10) schneidenden geraden Linie (21) in den nicht abgeschatteten Bereich (20) des Messkanals (3) eintreten, im wesentlichen geradlinig in Richtung der Linie (21) strömend in den Umlenkkanal (11) eintreten.

2. Kombination nach Anspruch 1,
**dadurch gekennzeichnet,**
**daß** eine von der Auslaßöffnung (13) aufgespannte Austrittsebene (17) gegenüber der Leitungs-Längsachse (3) um einen vorgegebenen Winkel (α) geneigt ist.

3. Kombination nach Anspruch 1,
**dadurch gekennzeichnet,**
**daß** der Meßkanal (9), das Meßelement (12) und der Umlenkkanal (11) in einem Meßmodul ausgebildet sind, das so in die Leitung (2) einsetzbar ist, daß die Meßkanal-Längsachse (19) um einen vorgegebenen Winkel (α) gegenüber der Leitungs-Längsachse (3) geneigt ist.

4. Kombination nach einem der Ansprüche 1 bis 3,
**dadurch gekennzeichnet,**
**daß** das Meßelement (12) an einer in den Meßkanal (9) ragenden Platte (18) befestigt ist, deren stromaufwärtige Stirnseite (23) durch zumindest eine schneidenartige Schrägfläche (24) abgeschrägt ist.

5. Kombination nach Anspruch 4,
**dadurch gekennzeichnet,**
**daß** die stromaufwärtige Stirnseite (23) der Platte (18) gegenüber der Hauptströmungsrichtung (25) in dem Meßkanal (9) so ausgerichtet ist, daß das Medium auf der stromaufwärtigen Stirnseite (23) mit einer Querströmungskomponente (32) auftrifft, die in der Ebene der schneidenartigen Schrägfläche (24) liegt.

6. Kombination nach einem der Ansprüche 1 bis 5,
**dadurch gekennzeichnet,**
**daß** eine Stirnfläche (34) zumindest einer Begrenzungswandung (35) des Meßkanals (9) an der Einlaßöffnung (10) gegenüber der Hauptströmungsrichtung (25) des Meßkanals (9) so ausgerichtet ist, daß das Medium auf die Stirnfläche (34) der Begrenzungswandung (35) mit einer Querströmungskomponente auftrifft, die in der Ebene der Stirnfläche (34) liegt.

7. Kombination nach einem der Ansprüche 1 bis 6,
**dadurch gekennzeichnet,**
**daß** der Meßkanal (9) sich entlang der Hauptströmungsrichtung (25) des durch den Meßkanal (9) strömenden Mediums verjüngt.

8. Kombination nach einem der Ansprüche 1 bis 7,
**dadurch gekennzeichnet,**
**daß** der Umlenkkanal (11) S-förmig ausgebildet ist.

9. Kombination nach einem der Ansprüche 1 bis 8,
**dadurch gekennzeichnet,**
**daß** das Meßelement (12) als mikromechanisches Bauteil mit auf einer Membran angeordneten Widerstandselementen ausgebildet ist.

## Claims

1. Combination of a conduit (2) and a measuring device (1) for measuring the mass of a medium flowing in the conduit (2) along a longitudinal axis (3) of the conduit, in particular the intake air mass of an internal combustion engine, comprising a measuring element (12) around which the flowing medium flows and which is arranged in a measuring channel (9), which is provided in the conduit (2) and extends along a longitudinal axis (19) of the measuring channel from an inlet opening (10) to a deflecting channel (11) that leads to an outlet opening (13) opening out in the conduit (2), wherein
the longitudinal axis (19) of the measuring channel is inclined in relation to the longitudinal axis (3) of the conduit by a predetermined angle (α) and the measuring channel (9) has a screened region (20), which is located outside the projection of the inlet opening (10) parallel along the longitudinal axis (3) of the conduit,
and wherein the measuring element (12) is arranged in the screened region (20) of the measuring channel (9),
**characterized in that** the longitudinal axis (19) of the measuring channel is inclined in relation to the longitudinal axis of the conduit in such a way that contaminating particles that are entrained by the flowing medium and the trajectory of which along a straight line (21) parallel to the longitudinal axis (3) of the conduit and intersecting the inlet opening (10) enter the non-screened region (20) of the measuring channel (3), enter the deflecting channel (11) flowing substantially straight in the direction of the line (21).

2. Combination according to Claim 1,
**characterized**
**in that** an outlet plane (17) defined by the outlet opening (13) is inclined in relation to the longitudinal axis (3) of the conduit by a predetermined angle (α).

3. Combination according to Claim 1,
**characterized**
**in that** the measuring channel (9), the measuring element (12) and the deflecting channel (11) are formed in a measuring module that can be inserted into the conduit (2) in such a way that the longitudinal axis (19) of the measuring channel is inclined in relation to the longitudinal axis (3) of the conduit by a predetermined angle (α).

4. Combination according to one of Claims 1 to 3,
**characterized**
**in that** the measuring element (12) is fastened to a plate (18), which protrudes into the measuring channel (9) and the upstream end face (23) of which is bevelled by at least one bezel-like bevelled face (24).

5. Combination according to Claim 4,
**characterized**
**in that** the upstream end face (23) of the plate (18) is aligned in relation to the main direction of flow (25) in the measuring channel (9) in such a way that the medium impinges on the upstream end face (23) with a cross-flow component (32) that lies in the plane of the bezel-like bevelled face (24).

6. Combination according to one of Claims 1 to 5,
**characterized**
**in that** an end face (34) of at least one delimiting wall (35) of the measuring channel (9) at the inlet opening (10) is aligned in relation to the main direction of flow (25) of the measuring channel (9) in such a way that the medium impinges on the end face (34) of the delimiting wall (35) with a cross-flow component that lies in the plane of the end face (34).

7. Combination according to one of Claims 1 to 6,
**characterized**
**in that** the measuring channel (9) tapers along the main direction of flow (25) of the medium flowing through the measuring channel (9).

8. Combination according to one of Claims 1 to 7,
**characterized**
**in that** the deflecting channel (11) is formed in an S-shaped manner.

9. Combination according to one of Claims 1 to 8,
**characterized**
**in that** the measuring element (12) is formed as a micromechanical component with resistance elements arranged on a membrane.

## Revendications

1. Combinaison d'un conduit (2) et d'un ensemble de mesure (1) qui mesure la masse d'un fluide qui s'écoule dans le conduit (2) suivant l'axe longitudinal (3) du conduit, en particulier de la masse d'air aspirée par un moteur à combustion interne, l'ensemble présentant un élément de mesure (12) balayé par le fluide en écoulement et disposé dans un canal de mesure (9) prévu dans le conduit (2) et s'étendant suivant l'axe longitudinal (19) du canal de mesure depuis une ouverture d'admission (10) jusqu'à un canal de renvoi (11) qui conduit vers une ouverture de sortie (13) qui débouche dans le conduit (2),
l'axe longitudinal (19) du canal de mesure étant incliné par rapport à l'axe longitudinal (3) du conduit d'un angle (α) prédéterminé et le canal de mesure (9) présentant une partie (20) occultée qui est située à l'extérieur de la projection de l'ouverture d'entrée (10) parallèlement à l'axe longitudinal (3) du conduit,
l'élément de mesure (12) étant disposé dans la partie occultée (20) du canal de mesure (9), **caractérisée en ce que**
l'axe longitudinal (19) du canal de mesure est incliné par rapport à l'axe longitudinal du conduit de telle sorte que des particules d'encrassement entraînées par le fluide en écoulement et dont le parcours pénètrent dans la partie non occultée (20) du canal de mesure (3) le long d'une ligne droite (21) parallèle à l'axe longitudinal (3) du conduit et coupant l'ouverture d'admission (10), pénètrent essentiellement en ligne droite dans le canal de renvoi (11) en s'écoulant dans la direction de la ligne (21).

2. Combinaison selon la revendication 1, **caractérisée en ce qu'**un plan de sortie (17) sous-tendu pas l'ouverture de sortie (13) est incliné d'un angle (α) prédéterminé par rapport à l'axe longitudinal (3) du conduit.

3. Combinaison selon la revendication 1, **caractérisée en ce que** le canal de mesure (9), l'élément de mesure (12) et le canal de renvoi (11) sont configurés en module de mesure qui peut être inséré dans le conduit (2) de telle sorte que l'axe longitudinal (19) du canal de mesure soit incliné d'un angle (α) prédéterminé par rapport à l'axe longitudinal (3) du conduit.

4. Combinaison selon l'une des revendications 1 à 3, **caractérisée en ce que** l'élément de mesure (12) est fixé sur une plaque (18) qui pénètre dans le canal de mesure (9) et dont le côté frontal (23) situé en amont dans le sens de l'écoulement est chanfreiné par au moins une surface oblique (24) en forme de lame.

5. Combinaison selon la revendication 4, **caractérisée en ce que** le côté frontal (23) situé en amont dans le sens de l'écoulement de la plaque (18) est orienté par rapport à la direction (25) d'écoulement principal dans le canal de mesure (9) de telle sorte que le fluide aboutisse sur le côté frontal (23) situé en amont dans la direction de l'écoulement avec une composante (32) d'écoulement transversal qui est située dans le plan de la surface oblique (24) en forme de lame.

6. Combinaison selon l'une des revendications 1 à 5, **caractérisée en ce qu'**une surface frontale (34) d'au moins une paroi frontière (35) du canal de mesure (9) est alignée sur l'ouverture d'admission (10) par rapport à la direction (25) d'écoulement principal du canal de mesure (9) de telle sorte que le fluide aboutisse sur la surface frontale (34) de la paroi frontière (35) avec une composante d'écoulement transversal située dans le plan de la surface frontale (34).

7. Combinaison selon l'une des revendications 1 à 6, **caractérisée en ce que** le canal de mesure (9) se rétrécit dans la direction (25) d'écoulement principal du fluide s'écoulant dans le canal de mesure (9).

8. Combinaison selon l'une des revendications 1 à 7, **caractérisée en ce que** le canal de renvoi (11) a la forme d'un S.

9. Combinaison selon l'une des revendications 1 à 8, **caractérisée en ce que** l'élément de mesure (12) est configuré comme composant micromécanique doté d'éléments de résistance disposés sur une membrane.
